# EUROPEAN PATENT APPLICATION

(11) **EP 4 793 155 A1**
(43) Date of publication of application: **19.08.2026**
(21) Application number: 24895387.9
(22) Date of filing: 19.04.2024
(51) Int. Cl.: B62K 15/00, B62J 1/08, B62K 21/16

(54) **FOLDING SCOOTER**

(30) Priority: 30.11.2023 CN 202311627669
(71) Applicant: Zhejiang Innuovo Rehabilitation Devices Co., Ltd, Dongyang Jinhua, Zhejiang 322118 (CN)
(72) Inventor: LONG, Yue, Jinhua, Zhejiang 322118 (CN); ZHU, Jingguo, Jinhua, Zhejiang 322118 (CN); WU, Xiaokang, Jinhua, Zhejiang 322118 (CN); DU, Shan, Jinhua, Zhejiang 322118 (CN)
(74) Representative: Lorenz Seidler Gossel Part. mbB
(86) International application number: PCT/CN2024/088975
(87) International publication number: WO 2025/112276

(57) **Abstract**

Disclosed is a foldable mobility scooter including a front frame, connecting portions are disposed on both sides of the front frame, and top ends of the connecting portions are connected to support rods pivotable toward the front frame; a seat plate rotatably connected to the support rods is disposed between the two support rods and above the front frame, a transmission rod is disposed in each of the support rods, one end of the transmission rod is rotatably connected to the connecting portion, and the other end of the transmission rod is rotatably connected to the seat plate and folded along with upward pivoting of the seat plate; and a handlebar stem is disposed in a middle portion of a front side of the front frame, the handlebar stem is rotatably connected to the front frame and is lockable, and when the support rods and the handlebar stem are folded, the seat plate and the support rods are located below the handlebar stem. The present invention with a simple structure is easy to operate, reduces self-weight of the mobility scooter, effectively enhances portability of the mobility scooter, reduces energy consumption, further facilitates carrying by the mobility scooter, increases endurance of the mobility scooter, and reduces production costs.

## Description

### TECHNICAL FIELD

The present invention relates to a foldable mobility scooter, and belongs to the technical field of mobility scooters.

### BACKGROUND

Mobility scooters are transport and auxiliary means intended for mobility, and have been widely used in modern society. Existing mobility scooters are relatively small in size, low in power, safe and convenient to use, with low use requirements. To facilitate storage and reduce space occupation, existing mobility scooters typically have certain folding functions. Chinese Patent Application No. CN116767407A discloses a foldable mobility scooter, and the mobility scooter includes a frame unit, a drive unit, and a steering unit; the frame unit includes a front frame, a rear frame, a support frame, and a locking mechanism, both sides of a rear end of the front frame are hinged to first hinge points disposed on two inner sides of a front end of the rear frame, and the support frame is located above the front frame; and the locking mechanism includes an unfolding locking plate and a folding locking plate that are rotatably disposed on an inner side of a rear end of the support frame and arranged in parallel front and back.

In design, a folding mechanism of a foldable electric mobility scooter is excessively complex and cumbersome in operation, thereby bringing certain inconvenience to a user. Moreover, a folding portion of a seat mostly employs a parallelogram linkage mechanism or a cross-type folding mechanism, such that two support rods on each side of the seat are required to cooperate with each other to complete folding, which not only increases production costs but also increases the weight of the mobility scooter.

### SUMMARY

An objective of the present invention is to provide a foldable mobility scooter, so as to overcome the defects of the prior art such as use inconvenience caused by excessively complex design and cumbersome operation, and more energy consumption caused by an increase in scooter body weight.

The above technical objective of the present invention is mainly achieved by the following technical solution: A foldable mobility scooter, includes a front frame, where connecting portions that are arranged in a mirror-symmetrical manner and bent upward toward a rear side of the front frame are disposed on both sides of the front frame, and top ends of the connecting portions are connected to support rods pivotable toward the front frame; a seat plate rotatably connected to the support rods is disposed between the two support rods and above the front frame, a transmission rod is disposed in each of the support rods, one end of the transmission rod is rotatably connected to the connecting portion, and the other end of the transmission rod is rotatably connected to the seat plate and folded along with upward pivoting of the seat plate; and a handlebar stem that is vertically arranged and rotatably connected to the front frame in a circumferential direction is disposed in a middle portion of a front side of the front frame, the handlebar stem is rotatably connected to the front frame and is lockable, and when the support rods and the handlebar stem are folded, the seat plate and the support rods are located below the handlebar stem; the support rods drive a seat to pivot toward the front frame at the connecting portion of the front frame, so as to achieve integral folding of the seat, the transmission rods rotate synchronously with the pivoting of the seat plate, and the support rods rotate synchronously with the transmission rods, such that the support rods, the transmission rods, and the seat plate rotate synchronously close to the front frame to achieve folding; then the handlebar stem is folded above the seat plate and the support rods, to achieve integral folding of the mobility scooter; the handlebar stem is folded above the seat plate and the support rods to prevent wires and a circuit board in the handlebar stem from being compressed and damaged; and the mobility scooter with a simple structure is easy to operate, reduces self-weight of the mobility scooter, effectively enhances portability of the mobility scooter, reduces energy consumption, further facilitates carrying by the mobility scooter, increases endurance of the mobility scooter, and reduces production costs.

Preferably, two movable pins that are arranged in a mirror-symmetrical manner and reciprocate toward the support rods on both sides are disposed at a bottom of one side of the seat plate connected to the support rods respectively; and each of the support rods is provided with a first positioning hole configured to insert the movable pin, a second positioning hole is formed on a side of each of the support rods close to a side edge of the seat plate, and both the first positioning hole and the second positioning hole are located on a rotation trajectory of the seat plate; the movable pins cooperate with the first positioning holes to lock the seat plate, such that the seat plate cannot pivot upward, and when the seat plate cannot pivot upward, the transmission rods and the support rods cannot rotate either, such that the seat plate and the support rods are limited through the locking by the movable pins, and the support rods remain supporting the seat plate; and when the movable pins disengage from the first positioning holes, the seat plate pivots upward, and arrangement of the second positioning holes ensures that when the seat plate pivots upward for folding, the movable pins are snapped into the second positioning holes to lock the seat plate and limit the pivoting of the seat plate, such that the seat plate remains stable without swinging during folding of the seat, and a folded state of the transmission rods and the support rods is locked to prevent easily releasing the folded state of the transmission rods and the support rods. Preferably, one end of the transmission rod connected to the seat plate is rotatably connected to the seat plate through a connecting piece, the connecting piece is provided with an extending portion bent toward the seat plate, a protruding post extending toward the seat plate is disposed on an inner side of the extending portion, and a recess engaging with the protruding post is formed on the seat plate; and arrangement of the connecting piece and the extending portion on the transmission rod ensures that when the seat plate is placed horizontal for a user to sit, a barrier between the seat plate and the support rods is increased to protect the seat and the support rods and reduce abrasion, and engaging arrangement of the protruding post and the recess enhances the stability between the seat plate and the support rods and prevents the seat plate from shaking.

Preferably, an arc-shaped guide groove is formed on an inner side of each of the support rods, a circle center of the arc-shaped guide groove is consistent with a rotation center of the seat plate, and the connecting piece is located in the arc-shaped guide groove and is capable of moving along an arc trajectory of the arc-shaped guide groove; and arrangement of the arc-shaped guide groove ensures that movement of the connecting piece is guided and limited when the seat plate rotates, such that the seat plate and the support rods rotate stably through the transmission of the transmission rods, and smoothness and stability of folding of the seat plate and the support rods are ensured.

Preferably, positioning portions for the movable pins to pass through are disposed on both sides of a bottom of the seat plate, each of the positioning portions is internally provided with a guide groove formed in an axial direction of the movable pin, an outer end of each of the movable pins is provided with a protruding portion that abuts against an inner wall of the guide groove, and a telescopic spring is disposed in each of the guide grooves corresponding to a peripheral side of the movable pin; and arrangement of the positioning portions and the guide grooves facilitates guiding and limiting the axial movement of the movable pins, ensures the stability of the movable pins during axial movement, and prevents radial deviation of the movable pins under stress, while arrangement of the protruding portions and the telescopic springs ensures that the movable pins automatically extend outward under the action of the telescopic springs and are connected to the first positioning holes or the second positioning holes through the protruding portions.

Preferably, a push plate movable in a front-rear direction of the seat plate is disposed between the two positioning portions, driving blocks configured to drive the movable pins to move axially are disposed on both sides of the push plate, each of the driving blocks is covered with a limiting cover connected to the seat plate, and a limiting groove configured to allow movement of the driving block is formed between the limiting cover and the seat plate; and arrangement of the push plate facilitates driving the push plate to move for folding as needed, and the push plate drives the movable pins to disengage from the first positioning holes or the second positioning holes through the driving blocks, thereby facilitating folding or unfolding of the seat, while arrangement of the limiting covers and the limiting grooves enables protection of components on the driving blocks, and a moving distance and direction of the push plate are limited through the limiting grooves, such that the stability of the push plate during movement is ensured.

Preferably, a protruding block is disposed on an outer side of each of the driving blocks, the protruding block is provided with a return spring disposed in a moving direction of the push plate, and an end portion of the return spring is connected to a protrusion disposed at the bottom of the seat plate; and arrangement of the protruding block facilitates engagement with the protrusion to fix the return spring, such that the push plate automatically restores after moving, thereby facilitating subsequent operation, achieving continuity of movement of the push plate, and achieving the repeatability of folding function of the seat.

Preferably, an inclined groove inclined toward an inner end of the movable pin is formed on an end face of the driving block, the inner end of the movable pin is provided with a roller that extends into the inclined groove and abuts against a side wall of the inclined groove, and the limiting cover is internally provided with a limiting portion that abuts against a side wall of the movable pin; and arrangement of the inclined groove ensures that the movement of the push plate drives the roller at the inner end of the movable pin to move along the inclined groove through the inclined groove of the driving block, such that outer ends of the two movable pins are driven to move axially synchronously under the limiting action of the limiting portions and the positioning portions, thereby ensuring the stability of the movable pins during movement, and achieving synchronous control of both sides of the seat plate in pivoting.

Preferably, a bottom post extending upward is disposed in the middle portion of a front side of the front frame, a bottom of the handlebar stem is provided with a base rotatably connected to the bottom post in a circumferential direction, and the handlebar stem is internally provided with a gas strut capable of controlling the handlebar stem to rotate toward the rear side of the front frame relative to the base; and a middle portion of the handlebar stem is provided with a switch that extends into the handlebar stem, comes into contact with a movable top end of the gas strut, and rotates up and down, and a fixed bottom end of the gas strut is rotatably connected to a middle portion of the base; and the handlebar stem axially rotates relative to the bottom post through the base, such that the steering function of the mobility scooter is achieved, and arrangement of the gas strut ensures that rotating folding of the handlebar stem is controlled through the switch, such that easier and more labor-saving rotating folding of the handlebar stem is achieved, and a state of the handlebar stem is locked through the switch.

Preferably, the switch includes a driving portion that comes into contact with an air valve at a top of the gas strut, and a pressing portion located outside the handlebar stem and disposed toward the rear side of the front frame, a positioning member is disposed on a peripheral side of the top of the gas strut, and a top of the positioning member extends to a side edge of the driving portion and is provided with a limiting post located above the driving portion; the driving portion pivots up and down through the pressing portion, telescopic control of the gas strut is achieved through contact with the air valve of the gas strut, and the handlebar stem is assisted to automatically fold or restore to an upright state, such that more convenient and labor-saving folding of the handlebar stem is achieved; and the positioning member fixes a radial position of the gas strut to prevent the gas strut from shaking, and the limiting post limits a pivoting angle of the pressing portion, thereby limiting an extension range of the gas strut and ensuring that the gas strut automatically stops extending after the handlebar stem is folded.

Therefore, the present invention with a simple structure is easy to operate, reduces self-weight of the mobility scooter, effectively enhances portability of the mobility scooter, reduces energy consumption, further facilitates carrying by the mobility scooter, increases endurance of the mobility scooter, and reduces production costs.

### BRIEF DESCRIPTION OF THE DRAWINGS

Figure 1 is a schematic structural view of the present invention in an unfolded state.
Figure 2 is a schematic structural view of the present invention in a folded state.
Figure 3 is a schematic structural view of a seat plate separated from support rods in Figure 1.
Figure 4 is a partial structural sectional view of the support rod in Figure 3.
Figure 5 is a schematic structural view of the seat plate in Figure 1.
Figure 6 is a partial structural sectional view of the seat plate in Figure 5.
Figure 7 is a structural sectional view of a handlebar stem in Figure 1.

### DETAILED DESCRIPTION OF EMBODIMENTS

The technical solution of the present invention will be further specifically described below through embodiments and in conjunction with the accompanying drawings.

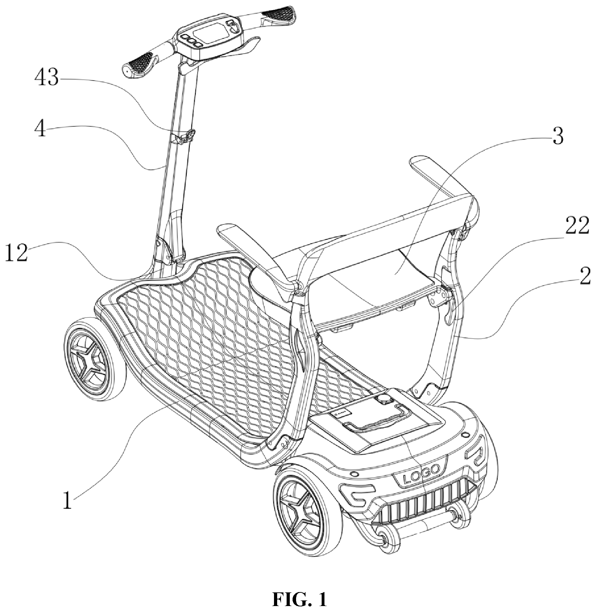

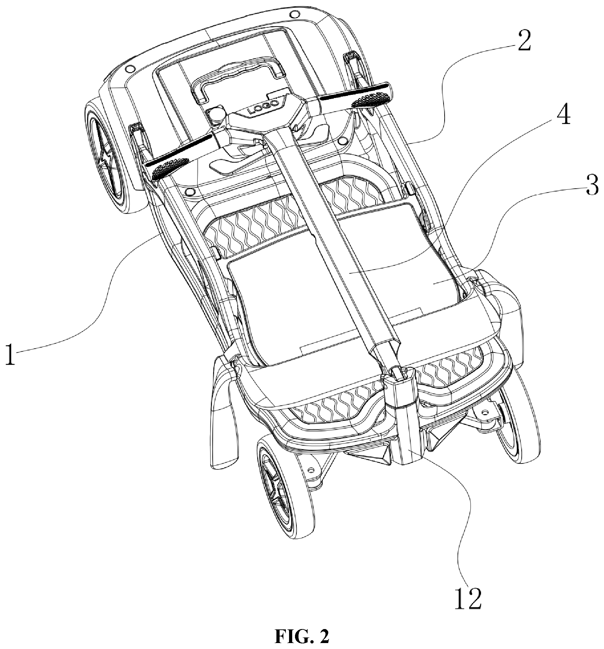

As shown in Figures 1 and 2, a foldable mobility scooter includes a front frame 1, connecting portions 11 that are arranged in a mirror-symmetrical manner and bent upward toward a rear side of the front frame 1 are disposed on both sides of the front frame 1, and top ends of the connecting portions 11 are connected to support rods 2 pivotable toward the front frame 1; a seat plate 3 rotatably connected to the support rods 2 is disposed between the two support rods 2 and above the front frame 1, a transmission rod 22 is disposed in each of the support rods 2, one end of the transmission rod 22 is rotatably connected to the connecting portion 11, and the other end of the transmission rod 22 is rotatably connected to the seat plate 3 and folded along with upward pivoting of the seat plate 3; and a handlebar stem 4 that is vertically arranged and rotatably connected to the front frame 1 in a circumferential direction is disposed in a middle portion of a front side of the front frame 1, the handlebar stem 4 is rotatably connected to the front frame 1 and is lockable, and when the support rods 2 and the handlebar stem 4 are folded, the seat plate 3 and the support rods 2 are located below the handlebar stem 4.

The front frame, the support rods, and the seat plate are all made of a carbon fiber material, which not only ensures hardness but also makes a scooter body lighter; the connecting portions of the front frame extend to a rear side of the scooter body and bend upward to connect to the support rods, the support rods extend upward to connect to a seat back, the seat plate is connected to middle portions of the support rods and cooperates with the seat back to facilitate sitting of a user, and the seat plate is disposed toward the front frame on a front side of the scooter body; during normal use, the seat plate remains horizontal relative to the front frame, and the support rods and the transmission rods are all remain upright; and for folding as needed, the seat plate is pivoted upward, such that the seat plate is folded toward the front frame together with the transmission rods and the support rods, then locking of the handlebar stem is released, and the handlebar stem is folded above the support rods and the seat plate, until the mobility scooter is folded completely.

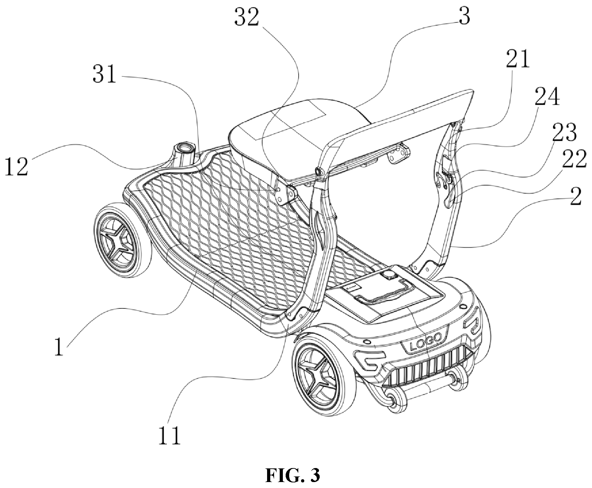

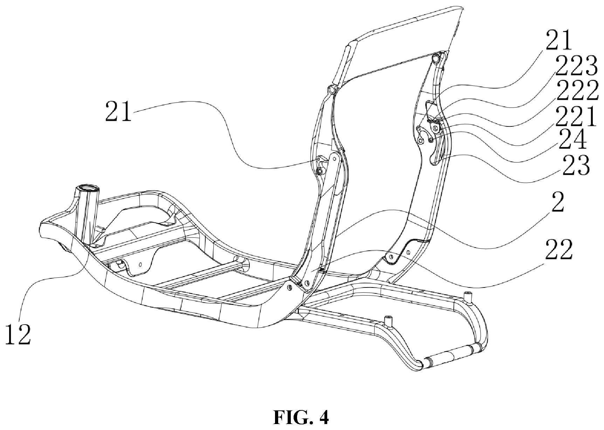

As shown in Figures 3 and 4, one end of the transmission rod 22 connected to the seat plate 3 is rotatably connected to the seat plate 3 through a connecting piece 221, the connecting piece 221 is provided with an extending portion 222 bent toward the seat plate 3, and a protruding post 223 extending toward the seat plate 3 is disposed on an inner side of the extending portion 222; a recess 32 engaging with the protruding post 223 is formed on the seat plate 3, an arc-shaped guide groove 23 is formed on an inner side of each of the support rods 2, and a circle center of the arc-shaped guide groove 23 is consistent with a rotation center of the seat plate 3; the connecting piece 221 is located in the arc-shaped guide groove 23 and is capable of moving along an arc trajectory of the arc-shaped guide groove 23, and two movable pins 31 that are arranged in a mirror-symmetrical manner and reciprocate toward the support rods 2 on both sides are disposed at a bottom of one side of the seat plate 3 connected to the support rods 2 respectively; and each of the support rods 2 is provided with a first positioning hole 21 configured to insert the movable pin 31, a second positioning hole 24 is formed on a side of each of the support rods 2 close to a side edge of the seat plate 3, and both the first positioning hole 21 and the second positioning hole 24 are located on a rotation trajectory of the seat plate 3.

When the seat plate remains horizontal, the side edge of the seat plate abuts against a protrusion on a side wall of the support rod; the movable pin is located in the first positioning hole, the connecting piece is disposed between the seat plate and the protrusion of the support rod, and the extending portion of the connecting piece is located between the protrusion of the support rod and the side edge of the seat plate, such that abrasion caused by direct contact between the seat and the support rods is reduced; the connecting piece and the extending portion are both made of plastic, the connecting piece is fixed on the transmission rod, and the side edge of the seat plate, the connecting piece, and the transmission rod are always rotatably connected to each other; when the side edge of the seat plate is connected to the connecting piece, and the protruding post of the extending portion is always engaged into the recess; when the seat plate is pivoted upward, the movable pins on both sides of the seat plate disengage from the first positioning holes; and during rotation of the seat plate, the side edge of the seat plate drives an end portion of the transmission rod to move in the arc-shaped guide groove through the connecting piece until the end portion moves to the other end of the arc-shaped guide groove, the movable pins engage into the second positioning holes, pivoting and folding of the support rods and the transmission rods are completed, and upward pivoting and folding of the seat plate are completed.

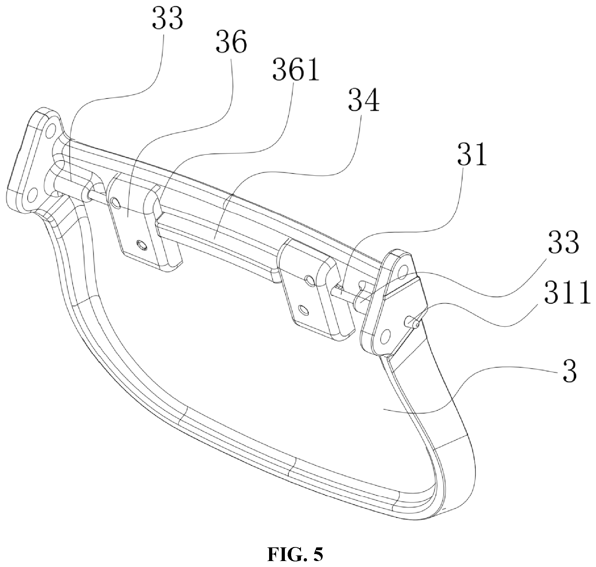

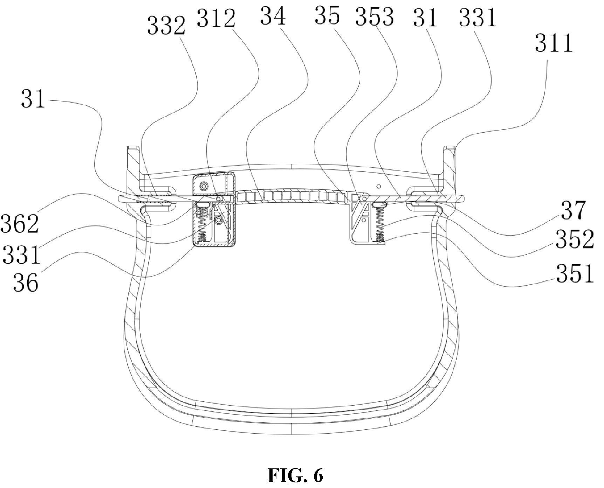

As shown in Figures 5 and 6, positioning portions 33 for the movable pins 31 to pass through are disposed on both sides of a bottom of the seat plate 3, each of the positioning portions 33 is internally provided with a guide groove 331 formed in an axial direction of the movable pin 31, and an outer end of each of the movable pins 31 is provided with a protruding portion 311 that abuts against an inner wall of the guide groove 331; a telescopic spring 332 is disposed in each of the guide grooves 331 corresponding to a peripheral side of the movable pin 31, a push plate 34 movable in a front-rear direction of the seat plate 3 is disposed between the two positioning portions 33, and driving blocks 35 configured to drive the movable pins 31 to move axially are disposed on both sides of the push plate 34; each of the driving blocks 35 is covered with a limiting cover 36 connected to the seat plate 3, and a limiting groove 361 configured to allow movement of the driving block 35 is formed between the limiting cover 36 and the seat plate 3; a protruding block 351 is disposed on an outer side of each of the driving blocks 35, the protruding block 351 is provided with a return spring 352 disposed in a moving direction of the push plate 34, , and an end portion of the return spring 352 is connected to a protrusion 37 disposed at the bottom of the seat plate 3; and an inclined groove 353 inclined toward an inner end of the movable pin 31 is formed on an end face of the driving block 35, the inner end of the movable pin 31 is provided with a roller 312 that extends into the inclined groove 353 and abuts against a side wall of the inclined groove 353, and the limiting cover 36 is internally provided with a limiting portion 362 that abuts against a side wall of the movable pin 31.

The movable pin passes through the positioning portion and extend into the limiting cover, the protruding portion at the outer end of the movable pin extend into the first positioning hole or the second positioning hole, and the inner end of the movable pin is located in the limiting portion of the limiting cover and connected to the roller located in the inclined groove, where the roller abuts against the side wall of the inclined groove; and when the outer end of the movable pin is located in the first positioning hole or the second positioning hole, the inner end of the movable pin is located at an opening of the inclined groove, and the telescopic spring acts to push the protruding portion of the movable pin such that the outer end of the movable pin is located in the first positioning hole or the second positioning hole, and the return spring is relaxed.

To disengage the movable pin from the first positioning hole or the second positioning hole as needed, the push plate is pulled such that the push plate moves along the limiting groove on the limiting cover and the driving block is driven to move synchronously, and the return spring starts contracting continuously; when the driving block moves, the roller at the inner end of the movable pin is driven to move through the inclined groove, such that the inner end of the movable pin moves along the inclined groove, and the movable pin moves axially toward the push plate due to the limitation by the guide groove and the limiting portion; the telescopic spring contracts in this case, the protruding portion at the outer end of the movable pin moves into the guide groove, and the movable pin disengages from the first positioning hole or the second positioning hole; and after the seat is adjusted in state, the push plate is released, the push plate returns to an original position under the action of the return spring, and simultaneously, the protruding portion of the movable pin moves toward an exterior of the guide groove along the inclined groove under the action of the telescopic spring until entering the first positioning hole or the second positioning hole.

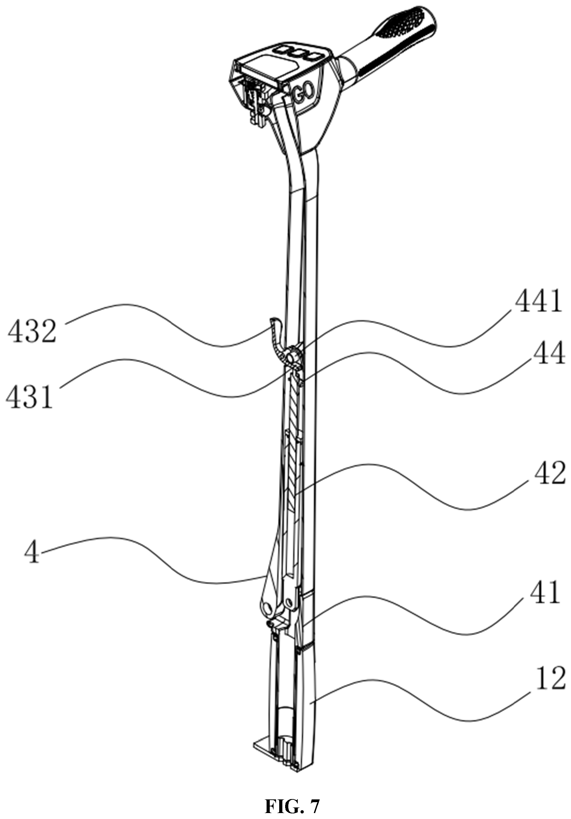

As shown in Figure 7, a bottom post 12 extending upward is disposed in the middle portion of a front side of the front frame 1, a bottom of the handlebar stem 4 is provided with a base 41 rotatably connected to the bottom post 12 in a circumferential direction, and the handlebar stem 4 is internally provided with a gas strut 42 capable of controlling the handlebar stem 4 to rotate toward the rear side of the front frame 1 relative to the base 41; a middle portion of the handlebar stem 4 is provided with a switch 43 that extends into the handlebar stem 4, comes into contact with a movable top end of the gas strut 42, and rotates up and down, and a fixed bottom end of the gas strut 42 is rotatably connected to a middle portion of the base 41; and the switch 43 includes a driving portion 431 that comes into contact with an air valve at a top of the gas strut 42, and a pressing portion 432 located outside the handlebar stem 4 and disposed toward the rear side of the front frame 1, a positioning member 44 is disposed on a peripheral side of the top of the gas strut 42, and a top of the positioning member 44 extends to a side edge of the driving portion 431 and is provided with a limiting post 441 located above the driving portion 431.

A top end of the handlebar stem is connected to a display screen of the mobility scooter, and steering control of the mobility scooter is achieved through circumferential rotation of the handlebar stem on the bottom post; the gas strut is currently available on the market and belongs to the prior art, which will not be repeated herein; when the handlebar stem remains vertical, the pressing portion is snapped on a side of the handlebar stem facing the seat plate, the driving portion comes into contact with the air valve of the gas strut without pressing, and in this case, and both the handlebar stem and the gas strut located in the handlebar stem cannot rotate and fold on the base; the switch is pressed to deflect the pressing portion toward the handlebar stem, the driving portion deflects toward the air valve of the gas strut synchronously to form a pressing force, such that the gas strut starts extending; and since the handlebar stem has a fixed length, extension of the gas strut drives the handlebar stem to deflect toward the seat plate synchronously, such that folding of the handlebar stem is achieved easily, a deflection speed of the handlebar stem is controlled, and electric control elements such as wires and circuit boards are prevented from being damaged due to too fast rotation and falling of the handlebar stem.

## Claims

1. A foldable mobility scooter, **characterized by** comprising a front frame, wherein connecting portions that are arranged in a mirror-symmetrical manner and bent upward toward a rear side of the front frame are disposed on both sides of the front frame, and top ends of the connecting portions are connected to support rods pivotable toward the front frame; a seat plate rotatably connected to the support rods is disposed between the two support rods and above the front frame, a transmission rod is disposed in each of the support rods, one end of the transmission rod is rotatably connected to the connecting portion, and the other end of the transmission rod is rotatably connected to the seat plate and folded along with upward pivoting of the seat plate; and a handlebar stem that is vertically arranged and rotatably connected to the front frame in a circumferential direction is disposed in a middle portion of a front side of the front frame, the handlebar stem is rotatably connected to the front frame and is lockable, and when the support rods and the handlebar stem are folded, the seat plate and the support rods are located below the handlebar stem.

2. The foldable mobility scooter according to claim 1, **characterized in that** two movable pins that are arranged in a mirror-symmetrical manner and reciprocate toward the support rods on both sides are disposed at a bottom of one side of the seat plate connected to the support rods respectively; and each of the support rods is provided with a first positioning hole configured to insert the movable pin, a second positioning hole is formed on a side of each of the support rods close to a side edge of the seat plate, and both the first positioning hole and the second positioning hole are located on a rotation trajectory of the seat plate.

3. The foldable mobility scooter according to claim 1, **characterized in that** one end of the transmission rod connected to the seat plate is rotatably connected to the seat plate through a connecting piece, the connecting piece is provided with an extending portion bent toward the seat plate, a protruding post extending toward the seat plate is disposed on an inner side of the extending portion, and a recess engaging with the protruding post is formed on the seat plate.

4. The foldable mobility scooter according to claim 3, **characterized in that** an arc-shaped guide groove is formed on an inner side of each of the support rods, a circle center of the arc-shaped guide groove is consistent with a rotation center of the seat plate, and the connecting piece is located in the arc-shaped guide groove and is capable of moving along an arc trajectory of the arc-shaped guide groove.

5. The foldable mobility scooter according to claim 2, **characterized in that** positioning portions for the movable pins to pass through are disposed on both sides of a bottom of the seat plate, each of the positioning portions is internally provided with a guide groove formed in an axial direction of the movable pin, an outer end of each of the movable pins is provided with a protruding portion that abuts against an inner wall of the guide groove, and a telescopic spring is disposed in each of the guide grooves corresponding to a peripheral side of the movable pin.

6. The foldable mobility scooter according to claim 5, **characterized in that** a push plate movable in a front-rear direction of the seat plate is disposed between the two positioning portions, driving blocks configured to drive the movable pins to move axially are disposed on both sides of the push plate, each of the driving blocks is covered with a limiting cover connected to the seat plate, and a limiting groove configured to allow movement of the driving block is formed between the limiting cover and the seat plate.

7. The foldable mobility scooter according to claim 6, **characterized in that** a protruding block is disposed on an outer side of each of the driving blocks, the protruding block is provided with a return spring disposed in a moving direction of the push plate, and an end portion of the return spring is connected to a protrusion disposed at the bottom of the seat plate.

8. The foldable mobility scooter according to claim 6, **characterized in that** an inclined groove inclined toward an inner end of the movable pin is formed on an end face of the driving block, the inner end of the movable pin is provided with a roller that extends into the inclined groove and abuts against a side wall of the inclined groove, and the limiting cover is internally provided with a limiting portion that abuts against a side wall of the movable pin.

9. The foldable mobility scooter according to claim 1, **characterized in that** a bottom post extending upward is disposed in the middle portion of a front side of the front frame, a bottom of the handlebar stem is provided with a base rotatably connected to the bottom post in a circumferential direction, and the handlebar stem is internally provided with a gas strut capable of controlling the handlebar stem to rotate toward the rear side of the front frame relative to the base; and a middle portion of the handlebar stem is provided with a switch that extends into the handlebar stem, comes into contact with a movable top end of the gas strut, and rotates up and down, and a fixed bottom end of the gas strut is rotatably connected to a middle portion of the base.

10. The foldable mobility scooter according to claim 9, **characterized in that** the switch comprises a driving portion that comes into contact with an air valve at a top of the gas strut, and a pressing portion located outside the handlebar stem and disposed toward the rear side of the front frame, a positioning member is disposed on a peripheral side of the top of the gas strut, and a top of the positioning member extends to a side edge of the driving portion and is provided with a limiting post located above the driving portion.
